# EUROPEAN PATENT SPECIFICATION

(11) **EP 3 969 655 B1**
(45) Date of publication and mention of the grant of the patent: **10.04.2024**
(21) Application number: 20725181.0
(22) Date of filing: 14.05.2020
(51) Int. Cl.: B26D 1/48, B26D 3/00, D06H 7/00, B23D 55/10, B23D 59/00

(54) **CUTTING MACHINE AND METHOD FOR CONTROLLING SAID MACHINE**
SCHNEIDEMASCHINE UND VERFAHREN ZUR STEUERUNG DIESER MASCHINE
MACHINE DE COUPE ET PROCÉDÉ DE COMMANDE DE LADITE MACHINE

(30) Priority: 17.05.2019 IT 201900006934
(43) Date of publication of application: 23.03.2022
(73) Proprietor: Italian Cutting Systems Societa' A Responsabilita' Limitata, 70024 Gravina in Puglia (BA) (IT)
(72) Inventor: MARCHETTI, Fedele, 70024 GRAVINA IN PUGLIA (IT)
(74) Representative: Modiano, Micaela Nadia
(86) International application number: PCT/EP2020/063499
(87) International publication number: WO 2020/234119

(56) References cited:
- WO-A1-2009/098721
- CN-A- 107 385 856
- JP-A- H10 277 914

## Description

The present invention relates to a cutting machine and a method for controlling said machine. A cutting machine in accordance with the preamble of claim 1 is known from WO2009098127 and JPH10277914.

Preferably, the machines referred to are those designed for cutting expanded resins, for example rigid, semirigid and flexible expanded polyurethane, and/or fibers or fabrics, for example vertical, horizontal or tiltable cutters, slitters, preferably "contour-cutting machines".

These machines have a cutting element, which can be oscillating (following an alternating motion) or circulating on a system of flywheels.

A problem that is common to these machines is that of maintaining the precision of cutting; this is linked to various different factors that affect the behavior of the blade during operation, and which can cause defects and errors in machining and/or in the result obtained through cutting or damage of the cutting element.

In order to describe in more detail the problems that need to be tackled, reference will be made in this discussion to an example of a conventional machine of this Applicant, of the type with a continuous circulating bandsaw blade. In this type of machine the blade, which takes the form of a closed ribbon, is tensioned between pulleys (or guide flywheels). In the case of the machine referred to, there are four pulleys, two upper and two lower, which guide the cutting element through a path that, seen from the front, is rectangular overall, with the lower horizontal section for cutting and the upper horizontal section for the return.

In this machine, the tensioning of the blade (understood as subjecting the blade to a tensioning load in the direction of longitudinal extension of the blade) occurs by virtue of a tensioning system in which one of the upper guide pulleys (also called the tensioning flywheel) is mounted so that it can move vertically, so that acting on it affects the cutting element, providing the necessary tensioning; in general in order to intervene on the tensioning flywheel a spring is used which is connected to the flywheel so that, by compressing it, the desired tensioning load on the blade is obtained. A spring further has the advantage of balancing any instantaneous variations in load which could arise in operation, by absorbing the vibrations before they can be transmitted to the rigid structure of the machine.

Acting on the spring (with any means known in the prior art, for example by way of a simple handwheel mechanism) applies the necessary tension force to tension the blade.

This conventional tensioning system is static: the tensioning load (which determines the initial deformation imposed on the cutting element through the tensioning flywheel) is applied before the start of the cutting operations; a determined load value is chosen depending on the type of blade (smooth or toothed), its geometry (length, width and thickness), and the material to be cut (density).

The Applicant has noted that this conventional tensioning system, while simple, is not optimal in that possible malfunctions can arise during operation (errors in cutting, possible damage to the blade); this limitation derives substantially from the fact that the blade, in operation, does not maintain an optimal tensioning, in that the original operating parameters used to set the static tensioning are many and varied (wear of the blade and variation of the geometric characteristics, heating of the blade during cutting and consequent thermal deformations, and deformations deriving from the contour cutting process itself); thus it becomes necessary, theoretically, to intervene by stopping the machine and resetting the load of the spring. This operation however is laborious and negatively affects the productivity of the machine, which needs to be stopped; the practical consequence of this situation is that only very rarely an intervention is made to adjust the tensioning load applied by the static system, except when mounting a different blade.

Another limitation of this conventional solution is linked to the fact that, ideally, in order to increase the useful life of the cutting element, the blade should be relaxed (by removing or reducing the tensioning load, in substance, down to the minimum value necessary just to keep it stable on the pulleys) when it is not engaged in cutting, and remaining subjected to the tensioning load only when it is in operation: in fact this practice reduces the overall time of a tensioning force applied on the blade and, ultimately, it reduces possible plastic deformations of the blade itself, or its yielding. However, the conventional static tensioning system, since it requires the operators to intervene on the machine every time it is desired to reduce the tension applied to the blade (an inconvenient and relatively long-lasting operation) has the end result that, as the Applicant has noted, often the blade is left under tension for rather long periods of time when it is not necessary (e.g. at night or over the weekend). The end result of all this is that the blade is subjected to excessive levels of tension; during the day's cutting and as soon as the day is finished, in fact, the blade (the temperature of which exceeds the ambient temperature owing to the friction generated during cutting between the blade and the material and the pulleys) cools; the contraction owing to cooling of the blade, if still subjected to the tensioning load applied by the static system, contributes to the formation of defects in the metallic material of the blade, like shrinkage cracks (especially on the back of the blade or at the root of the teeth, which are linked to shrinkage tensions as a result of free contraction being impeded during cooling). This has a considerable negative impact in terms of the useful life of the blade itself, when one considers the fatigue stresses to which it is subjected in cutting operations. Furthermore, the other elements of the machine (bearings, pulleys etc.) are subjected to unnecessary stresses since they remain subjected to a certain load even when it is not necessary.

The aim of the present invention is to make available a cutting machine and a method for controlling said machine that are capable of improving the known art in one or more of the above mentioned aspects.

Within this aim, an object of the invention is to provide a cutting machine and a method for controlling said machine that are capable of preventing breakages of the blade or of the components of the machine.

Another object of the invention is to provide a cutting machine and a method for controlling said machine that are capable of preventing errors in cutting or in shaping the workpiece.

A further object of the invention is to provide a cutting machine and a method for controlling said machine that are capable of increasing the useful life of the blade, by facilitating the operations to relax the blade when in the non-operating condition.

A further object of the invention is to provide a cutting machine and a method for controlling said machine that are capable of detecting any variation of the parameters that arises during operation (e.g. deformations of the blade owing to the cutting process and to the associated mechanical and thermal stresses, wear), and which are capable of making corrective actions in order to compensate such variations.

Furthermore, another object of the present invention is to overcome the drawbacks of the known art in an alternative manner to any existing solutions.

Another object of the invention is to provide a cutting machine and a method for controlling said machine that are highly reliable, easy to implement and of low cost.

This aim and these and other objects which will become better apparent hereinafter are achieved by a cutting machine and a method for controlling said machine according to the respective independent claims, optionally provided with one or more of the characteristics of the respective dependent claims.

Further characteristics and advantages of the invention will become better apparent from the description of a preferred, but not exclusive, embodiment of the invention, which is illustrated by way of non-limiting example in the accompanying drawings wherein:
- Figure 1 is a perspective view from the front of a continuous circulating bandsaw blade machine according to the invention with a hold-down frame and a conveyor table for transporting the workpiece to a frontally advanced position with respect to the vertically movable cutting portal, in a first active condition;
- Figure 2 shows the machine of Figure 1 in a second active condition;

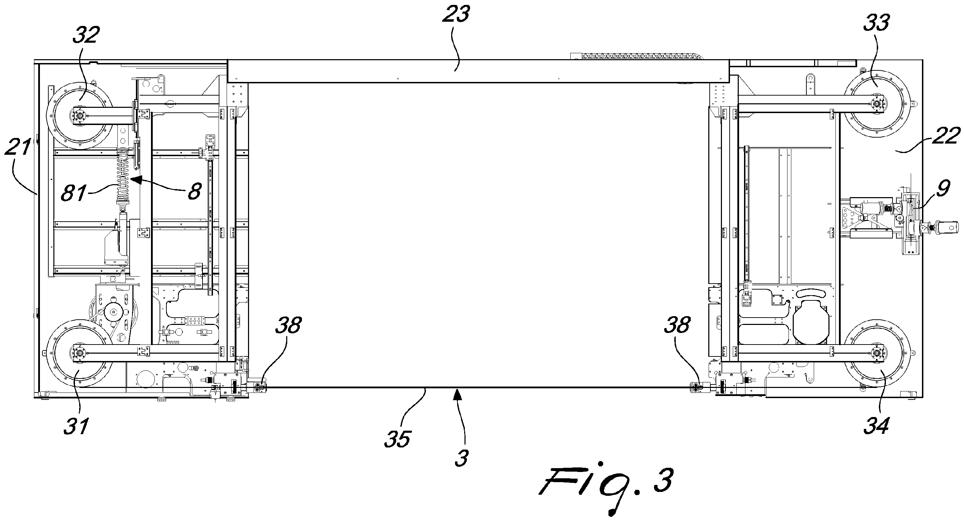

- Figure 3 is a front elevation view of the internal parts of the machine of Figure 1,

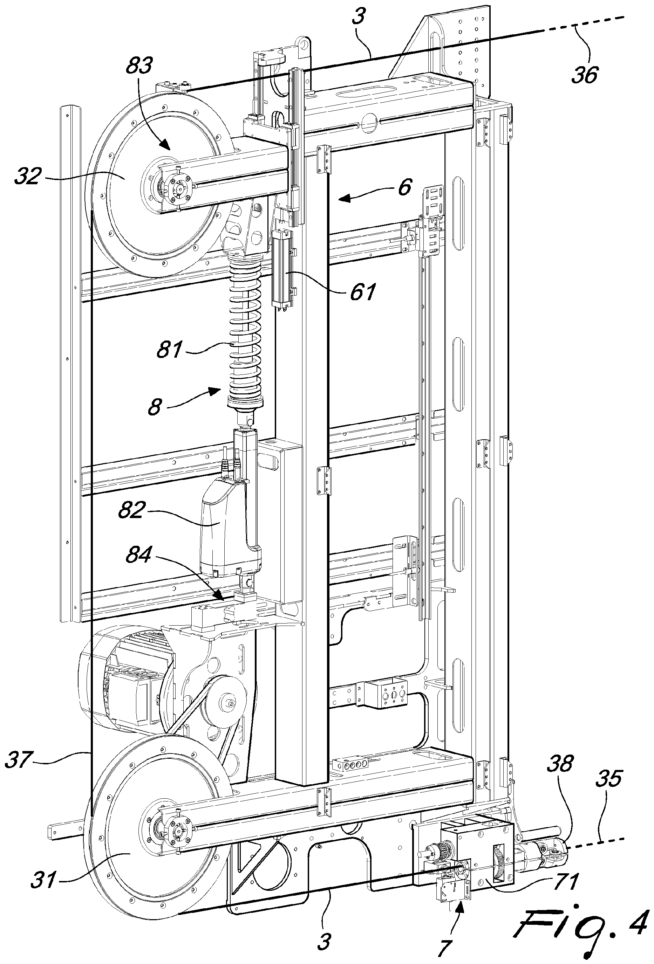

- Figure 4 is a perspective view of a detail of the machine of the previous figures;
- Figure 5 is an exploded perspective view of figure 4;
- Figure 6 is a cross-sectional view of a blade of a machine according to the invention;

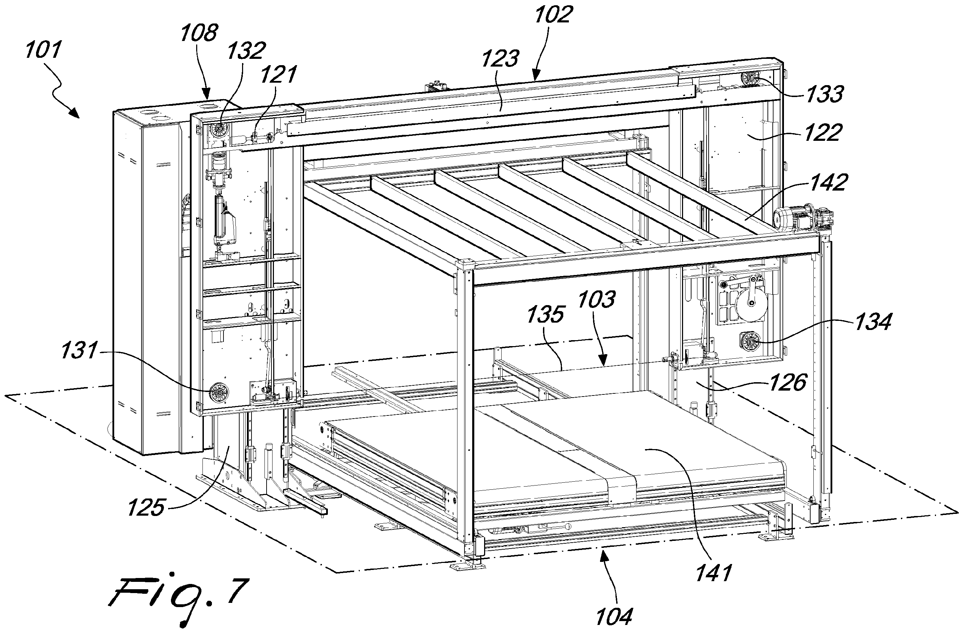

- Figure 7 is a perspective view from the front of an oscillating blade machine according to the invention with a hold-down frame and a conveyor table for transporting the workpiece to a frontally advanced position with respect to the vertically movable cutting portal;

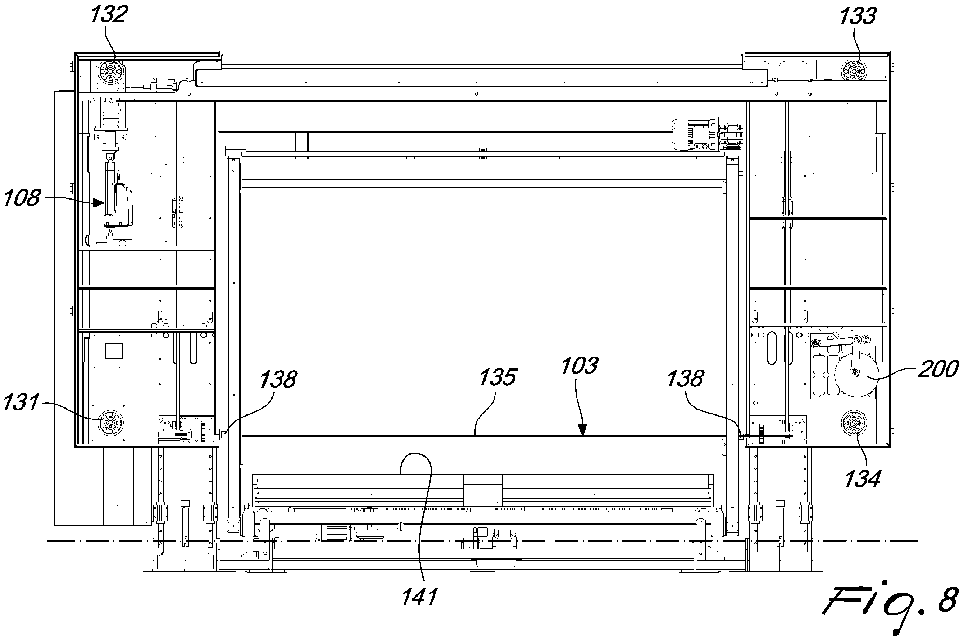

- Figure 8 is a front elevation view of the machine of figure 7;

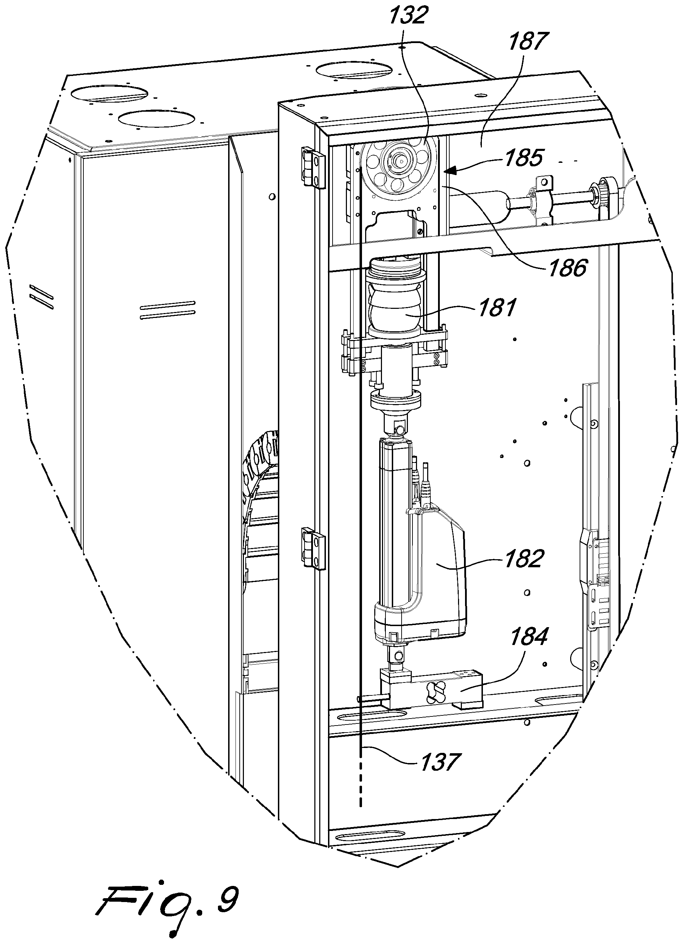

- Figure 9 is a perspective view of a detail of the machine of Figures 7 and 8;
- Figure 10 is a flowchart of an advanced embodiment of a control method according to the invention.

With reference to the figures, a preferred embodiment of the cutting machine according to the invention is generally designated by the reference numeral 1, 101 respectively for a machine with a cutting element that circulates continuously 1 or one that operates with an oscillating motion 101.

For the embodiment 101 of the machine, the same reference numerals as for the embodiment 1 are used, incremented by a hundred (100), to designate the same, or analogous, parts.

The cutting machine 1, 101, in the non-limiting embodiment shown, is in the preferable form of a contour-cutting machine for cutting rigid, semirigid and flexible expanded resins, and/or fibers, or fabrics.

Generally speaking it should be noted from this point onward that the teachings of the present invention can be applied to cutting machines designed for cutting expanded resins (for example rigid, semirigid and flexible expanded polyurethane) and/or fibers or fabrics, such as vertical, horizontal or tiltable cutters, or slitters or, indeed, contour-cutting machines.

Before descending into the details of the description of the non-limiting examples of the accompanying figures, it should be noted that generally speaking, the machines according to the invention are those designed for cutting expanded resins, fibers or fabrics, and comprise:
- a cutting portal which comprises at least one first upright unit and a plurality of pulleys,
- a cutting element which is functionally engaged by the pulleys of the cutting portal;
- a feed unit for feeding a workpiece, which cooperates with the cutting portal in order to bring the workpiece to the cutting element in order to cut the workpiece;
- a tensioning system for tensioning the cutting element, which is configured to apply at least a tensioning load to the cutting element.

According to the invention, in the generic cutting machine just described the tensioning system comprises:
- a measurement means for measuring the tensioning load applied to the cutting element, which is configured to measure a value of the tensioning load during a cutting work step of the machine, and
- a means for applying and adjusting the tensioning load which is functionally connected to the measurement means in order to modify the tensioning load applied to the cutting element in a cutting work step of the machine.

Turning now to describe the preferred and non-limiting examples of the accompanying figures, the machines 1, 101 shown herein are contour-cutters.

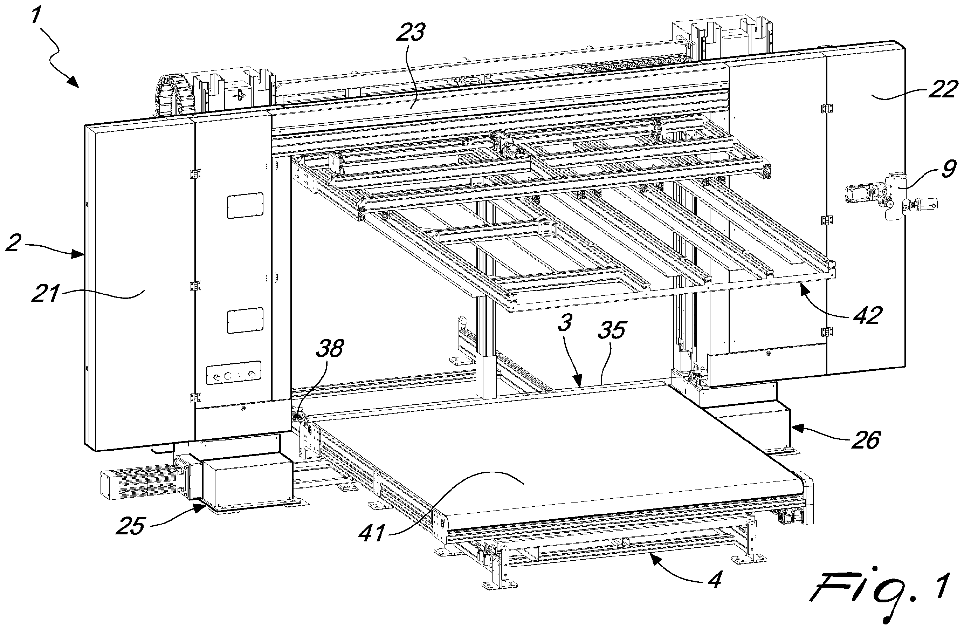

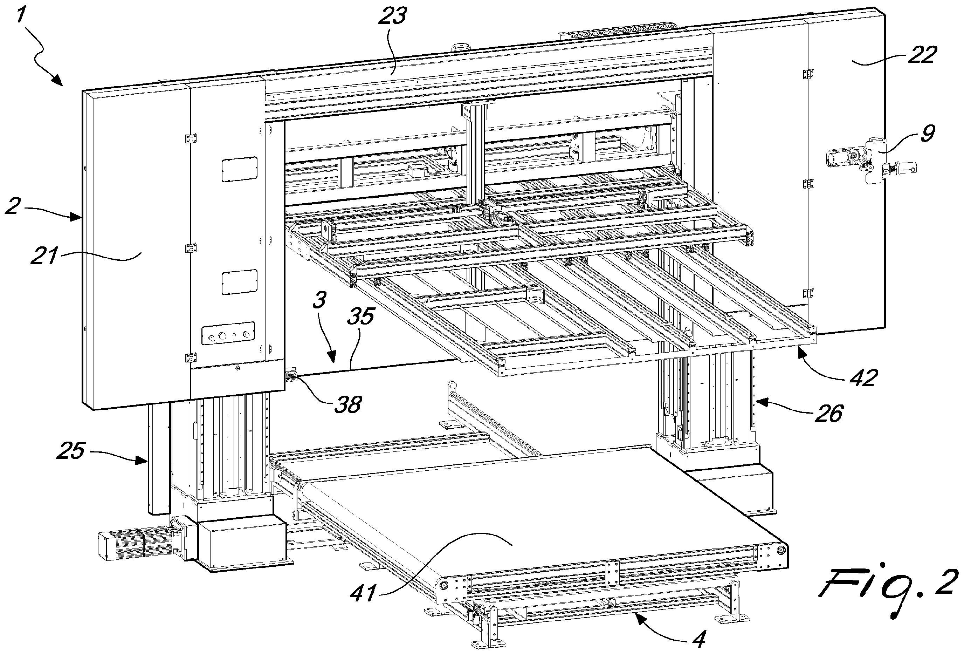

The machine 1, 101 comprises a cutting portal 2, 102, preferably moveable, which is provided at least with a first and optionally (as in this case) with a second upright unit 21, 22, 121, 122 which extend parallel and vertically and, optionally (as in this case), two supporting columns 25, 26 and 125, 126 each one of which is adapted to support the respective upright unit 21, 22 and 121, 122 so that it can move vertically, in such a way that each one of the upright units 21, 22 and 121, 122 can be translated vertically on the respective column 25, 26 and 125, 126, until they reach, in the operation of the machine, the preferred heights (for example the two configurations of Figure 1 and Figure 2 are shown for the machine 1).

The movement and sliding coupling of the upright units 21, 22 and 121, 122 on the columns 25, 26 and 125, 126 is motorized in a manner that is known per se (e.g. with rack and pinion slides and electric motors or the like) and therefore this aspect will not be described further here.

Optionally, as in the preferred solution shown, the two upright units 21, 22 and 121, 122 are connected by a crossmember 23 and 123, the function of which is to ensure the same vertical movement of the upright units 21, 22 and 121, 122 and to strengthen the structure; in a machine 1 with a bandsaw blade 3 the crossmember 23 optionally also comprises a protective casing, through which the return section 36 of the blade 3 passes, in order to protect the work area and the blade 3 itself.

Turning now to the cutting element 3, 103, this is in the form of a continuous bandsaw blade in the machine 1, while, in the machine 101, the cutting element 103 comprises a blade that is substantially rectilinear and is coupled at the free terminal ends to two movement belts 137.

Regardless of the type of cutting element 3, 103, it extends at least according to at least one first direction (horizontal in this example) between the upright units 21, 22 of the cutting portal 2, defining a cutting section 35, 135 in such zone. In other embodiments (not shown) the cutting element 3, 103 defines a vertical cutting section 35, 135 with a single upright.

In the preferred and illustrated case of the machine 1 with a continuously circulating closed-loop band blade type cutting element 3, both the lower cutting section 35 and the upper return section 36 extend between the upright units 21, 22, while the upright units 21, 22 accommodate the substantially vertical sections 37 of the bandsaw blade 3 inside them.

By contrast, in the machine 101 with an oscillating motion cutting element 103, the single section (the cutting section) of the blade 135, which is straight or substantially straight, extends between the upright units 21, 22, while the movement belts 137 for moving the cutting element 103 extend inside the uprights 121 and 122.

The cutting element 3, 103, regardless of its implementation, is moved by dedicated motors, in a manner that is known per se; suffice it to say that usually, for the continuous circulating bandsaw blade cutting element 3, there is one or more driving pulleys which actuate the cutting element 3 in rotation, while for the oscillating motion cutting element 103 there are motors and flywheels 200 which move the cutting element 103 alternately (along the longitudinal direction of the cutting section 135).

Furthermore, preferably, the cutting section 35, 135 of the cutting element 3 or 103 can be oriented in space by way of a rotation on its axis at least of the cutting section 35, 135: in this manner, with respect to the horizontal, the branch cutting edge 35, 135 can be inclined by a certain degree, which can vary even during the steps of cutting, so as to shape the workpiece, for example with oblique cuts or variously contoured cuts.

To this end the machine 1, 101 preferably comprises motorized heads for orienting the blade 38, 138 which rotatably engage the blade 3, 103 at least at the end portions of the cutting section 35, 135; the heads 38, 138 are rotatable on their axis and their rotation determines the inclination of the cutting section 35, 135 which therefore is arranged with the corresponding cutting edge oriented according to a certain angle with respect to a horizontal plane that is parallel to the surface on which the workpiece rests; this contrivance too is known in these types of contour-cutting machines, and therefore it will not be discussed further here.

The machine 1, 101 also comprises a feed unit 4, 104 for feeding a workpiece, for example a block of expanded resin or the like.

The feed unit 4, 104 comprises, in these examples, at least one conveyor table 41, 141 and a hold-down frame 42, 142 which extend preferably substantially horizontally and mutually parallel and define an intermediate space in which the workpiece to be worked is accommodated.

The hold-down frame 42, 142 (also known as a "press" in the sector) can be moved toward/away from the conveyor table 41, 141 in order to hold the workpiece between the two, optionally compressing it, as in the case of a workpiece made of expanded material; this ensures greater precision in carrying out cuts and contours.

In order to carry out the cut, both the conveyor table 41, 141 and the hold-down frame 42, 142 are moveable in a horizontal direction away from and toward the cutting element 3, 103; in this manner, while the cutting section 35, 135 is oriented (by virtue of the heads 38, 138) and is moved vertically (by virtue of the movement of the upright units 21, 22 and 121, 122), the workpiece is advanced toward the cutting zone, so that various different outlines and cuts of the workpiece can be made via a controlled and synchronized combination of the various movements just described.

In other solutions, not shown, the feed unit instead comprises only a footing, which is fixed or movable depending on the individual case.

The machine 1, 101 also comprises a tensioning system 8, 108 for tensioning the cutting element 3, 103, which is configured to apply the necessary tensioning to the cutting element 3 and 103 in order to execute the cut correctly and to ensure the best utilization efficiency of the cutting element, as described previously.

According to the type of cutting element 3 or 103, the tensioning system 8 and 108 can take different forms; for now it is sufficient to note that the tensioning load applied places the blade 3, 103 under tension so as to ensure that it is not bent or deformed by the forces that are generated between the workpiece and the cutting element during the step of cutting.

According to the invention, as mentioned above and generally, the tensioning system 8, 108 comprises:
- a measurement means 84, 184 for measuring the tensioning load applied to the cutting element 3, 103, which is configured to measure a value of the tensioning load during a work step of the machine 1, 101, and
- a means for applying and adjusting the tensioning load which is functionally connected to the measurement means 84, 184 in order to modify the tensioning load applied to the cutting element 3, 103 in a work step of the machine 1, 101; in this manner it is advantageously possible to control the tensioning load applied to the cutting element 3, 103 and adjust it optimally for cutting and for the reduction of wear or the prevention of possible failures or malfunctions and/or defects in cutting the outlines, which can result in the entire block being discarded.

The term "functionally connected" (referring to the means for applying and adjusting the load and to the measurement means) is used to indicate that the operation of the means for applying and adjusting the load is also controlled as a function of the measurements that have been made by way of the measurement means; to this end there may for example be a control unit connected to both, which forms part of the tensioning system.

Preferably the tensioning system 8, 108 for tensioning the cutting element comprises an elastic means 81, 181 and the adjustment means comprises an actuator 82, 182 which is coupled to the elastic means 81, 181 in order to apply a load to the elastic element 81, 181, the measurement means 84, 184 for measuring the tensioning load being configured to measure a load of the elastic element 81, 181.

Measuring the tensioning load applied to the cutting element 3, 103 can be direct or indirect; in the preferred and illustrated embodiment, as will be seen shortly, the measurement is indirect, in fact the measurement means 84, 184 for measuring the tensioning load is configured to measure a load through the elastic element 81, 181, which acts on a movable pulley 32, 132 of a system of pulleys 31, 32, 33, 34 and 131, 132, 133, 134 for guiding the cutting element 3, 103.

According to the invention, the measurement means for measuring the tensioning load is configured at least to perform the measurement in real time during a cutting step of the machine, so as to measure the tensioning load exerted on the cutting element 3, 103 dynamically and not statically, as is the case in the known art and so as to intervene to modify (or adjust) such tensioning load even during the cutting.

Both for the machine 1 and for the machine 101, the upright units 21, 22, 121, 122 comprise two pulleys, respectively:
- for the machine 1: a first, lower pulley 31, 34 for each upright unit 21, 22, and a second, upper pulley 32, 33 for each upright unit 21, 22;
- for the machine 101: a first, lower pulley 131, 134 for each upright unit 121, 122, and a second, upper pulley 132, 133 for each upright unit 121, 122.

The pulleys 31, 32, 33, 34 (for the machine 1) and 131, 132, 133, 134 (for the machine 101) are arranged, in a front elevation view, substantially at the corners of a rectangle.

In the machine 1 the cutting element 3 is engaged on the pulleys 31, 32, 33, 34 so as to configure the lower, cutting section 35 (which is substantially horizontal), the upper, return section 36 (which is also substantially horizontal), and the two substantially vertical sections 37 which run parallel to the upright units 21, 22, preferably inside them.

In the machine 101, however, the blade of the cutting element 103 ends approximately at two uprights 121 and 122 and the movement belts connected to it are engaged on the pulleys 131, 132, 133, 134: in this manner the (substantially horizontal) lower, cutting section 35 is provided substantially by way of the blade of the cutting element 103, while the two substantially vertical sections 137 which run parallel to the upright units 121, 122 (preferably inside them) are provided by the two movement belts 137.

In the preferred embodiment, the tensioning system 8, 108 comprises a movable pulley 32 and 132: regardless of the type of machine 1, 101, in fact, at least one pulley (in this example the pulleys 32 and 132 of the first upright units 21 and 121) is mounted so that it can move (preferably slideably) on the respective upright unit 21 and 121; by virtue of this contrivance, by way of the movable pulley 32 or 132 it is possible to apply the tensioning load on the cutting element: either directly on the bandsaw blade (as in the cutting element 3) or indirectly through the movement belts 137 (as in the cutting element 103).

In more detail, the movable pulley 32, 132 is supported by a supporting structure 85, 185 which can move slideably in sliding guides 86, 186 that are applied to an internal frame 87, 187 of the upright unit 21 or 121.

The movable pulley 32, 132 is thus free to translate (in these examples, vertically) along the guides 86 or 186.

An elastic element 81, 181 that is capable of applying a direct force along the guides acts on the supporting structure 85 or 185; because of the fact that the pulley 32, 132 can move freely along the guides 86, 186, it follows from this that the force applied by the elastic element 81, 181 is transmitted to the cutting element 3, 103.

An actuator 82, 182 acts on the elastic element 81, 181 and is connected to the upright frame 87, 187 with a load cell 84, 184 interposed between the two, which in these examples performs the function of the measurement means 84, 184.

By compressing or releasing the elastic element 81, the actuator 82, 182 determines the load and therefore determines a force that is then transmitted released as a tensioning stress on the cutting element 3, 103, in particular on the vertical section 37 of the cutting element 3 or on the belt 137 of the cutting element 103, which extend between the lower pulley 31, 131 (fixed on the frame 87, 187) and the pulley 32, 132 that can move with respect to the frame 87, 187 by virtue of the fact that the supporting structure 85, 185 is able to move slideably in the guides 86, 186.

The measuring, conveniently shifted to the measurement means, occurs at the point of application of the load, which is located between the actuator and the elastic means. The load is then transmitted to the elastic means, which in turn will apply a force to the movable pulley, moving it, and thus adjusting the tensioning load applied to the cutting element. The system of movable pulley with blade will exert an elastic reaction on the elastic means which counteracts the tensioning force applied. The elastic means will then shift the elastic force to the actuator, such that the measurement registered is that of the tensioning load exerted dynamically on the cutting element.

The remaining pulleys 31, 33, 34 (for the machine 1) and 131, 133, 134 (for the machine 101) are preferably fixed on the frame 87, 187 of the respective upright unit 21, 22 and 121, 122.

With regard to the elastic means 81, 181, this can be both of the type with a helical spring (like the means 81) and of the type with a pneumatic spring (like the means 181) or even of a different type (not shown).

The load of the elastic element 81, 181 determined by the actuator 82, 182 and measured by the load cell 84, 184 is proportional to the tensioning load applied to the cutting element 3, 103.

In a basic form, the method according to the invention relates to a method for controlling a cutting machine 1, 101, preferably a contour-cutter for cutting expanded resins, fibers or fabrics, that comprises the following steps, which are performed during the execution of a cutting work step of the machine:
a. measuring 901 at least one tensioning load applied to a cutting element 3, 103 of the machine 1, 101;
b. comparing the tensioning load to a respective allowable range 905, and
c. if the measured tensioning load does not fall within the allowable range, modifying 906 the tensioning load so as to make it fall within the allowable range.

The allowable range of values of the tensioning load is chosen on a case by case basis as a function of the parameters of the cutting element, in a manner known to the person skilled in the art, who is able, once the cutting element is known, to determine what range of values is such as to avoid breakages or yielding or deformations of the cutting element.

Preferably, measuring the tensioning load applied to the cutting element 3, 103 occurs by way of measuring a load applied by the actuator 82, 182 to the elastic element 81, 181 which acts on a partially yielding pulley 32, 132 which engages the cutting element 3, 103.

Preferably, adjusting (increasing/decreasing) the tensioning load occurs by acting correspondingly on the actuator 82, 182 coupled to the elastic element 81, 181 in order to determine the load of the elastic element 81, 181.

Turning now to the first embodiment shown in the drawings, i.e. to the machine 1, this optionally also comprises an assembly 6 for measuring the elongation of the cutting element 3, which is configured to measure an elongation of the cutting element 3 (i.e. a variation in length of the cutting element).

The assembly 6 for measuring elongation is configured to perform at least the measurement in real time during a cutting step (or work step) of the machine, so as to measure the variation in length (elongation) to which the blade 3 is subjected, and therefore dynamically.

In the embodiment shown, the elongation is measured by way of measuring the displacement of the pulley 32 with respect to the frame.

The machine 1 optionally also comprises a temperature sensor assembly 7, which is configured to measure a temperature of the cutting element 3.

Similarly to the assembly 6, in this case too the temperature sensor assembly 7 is configured to perform the measurement of temperature in real time during a cutting work step of the machine, so as to measure the temperature that the blade 3 reaches and preferably in a zone immediately exiting from the workpiece being cut.

Finally, according to the invention, the machine 1 optionally comprises a blade inspection assembly 9, which is configured to detect at least one geometric condition for sharpening and a width of the cutting element 3, when the latter is implemented as a continuous bandsaw blade.

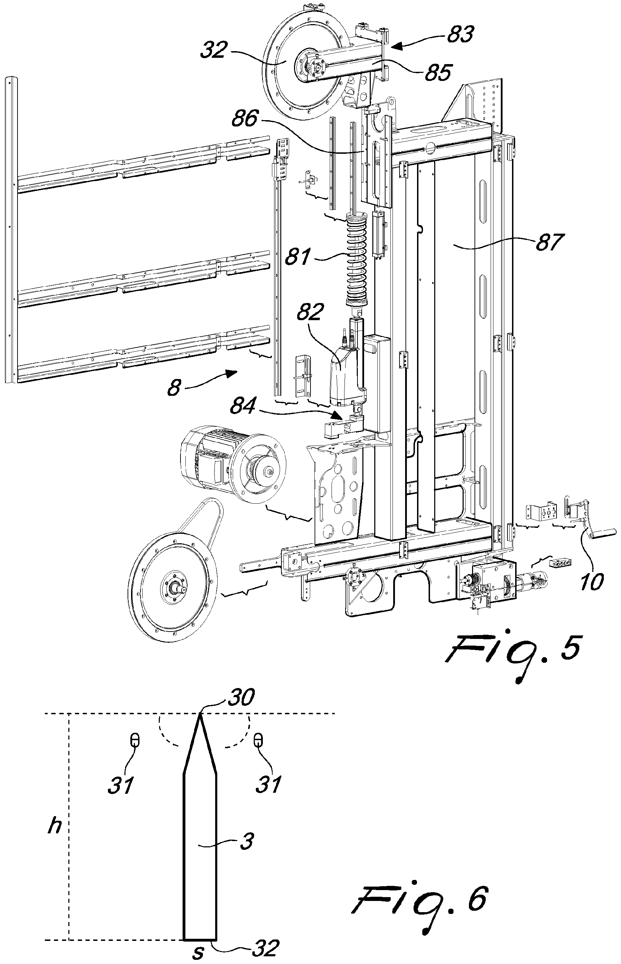

With reference to the "width" of the cutting element 3 and with reference to Figure 6, this is the dimension h which, in a transverse cross-section of the cutting element 3, is the greater dimension; in other words, when looking at a transverse cross-section of the cutting element 3 like the one in Figure 6, the width h is the dimension that extends from the back 32 to the tip of the cutting edge 30 of the blade.

Then, in order to determine a geometric condition for sharpening, a measurement is taken of the angles 31 of the inclined sides that go to form the tip 30; according to the characteristics of the blade, there may be just one angle.

Similarly to the other assemblies, in this case too the assembly 9, if present, is configured to perform the detection of sharpening and the measurement of the width of the blade 3 in real time during a cutting step of the machine 1 and preferably before the circulating bandsaw blade enters the workpiece being cut.

In this manner the machine 1 just described, which is provided with measurement assemblies in addition to the measurement assembly for measuring the tensioning load on the cutting element, is capable of monitoring (by way of measurement or detection, direct or indirect) further parameters that relate to the blade and which can affect the duration thereof or the precision of cutting, i.e. (in addition to the applied tensioning load) elongation, temperature and optionally also the dimensions and sharpening of the cutting element 3.

As will be seen better below, this makes it possible to intervene if the monitored parameters show deviations from preset reference values.

Similarly to the case with the load values, these values can be chosen by the person skilled in the art based on the data sheet of the cutting element used, on a case by case basis, or based on his or her experience.

Turning now to the assembly 6 for measuring the elongation of the cutting element 3, this comprises a position transducer 61 for measuring a displacement of the position of the movable pulley 32.

In the preferred and illustrated case, the position transducer 61 detects the position of the supporting structure 85 of the movable pulley 32 in the guides 86, i.e. the position that the upper movable pulley 32 of the first upright 21 reaches, in this case vertically.

Since the remaining pulleys 31, 33, 34 are fixed with respect to the frame 87 of the respective upright units 21, 22, the movement of the upper pulley 32 follows the lengthening of the cutting element 3 (which occurs for example as a consequence of a thermal dilation or of the yielding of the material or of reduction of the stressed cross-section for the same load applied) and, substantially, coincides with the elongation undergone by the cutting element 3.

Turning now to examine the temperature sensor assembly 7, this preferably comprises an optical sensor for temperature, such as for example a thermographic camera, 71 for the detection of the temperature of the cutting element 3.

The temperature sensor 71 is provided preferably at the first upright unit 21 and more preferably at the final point of the cutting section 35 (in this example the cutting element 3 in fact moves in such a way that the direction of motion in the cutting section 35 goes from the second 22 to the first 21 upright, such first upright 21 therefore being arranged downstream of the second 22, following the rotation of the cutting element 3), so as to measure the temperature of the cutting element 3 as soon as the cutting engagement has ended.

If provided, the blade inspection assembly 9 is configured to detect at least one geometric condition for sharpening and a width of the cutting element 3 and to this end it comprises an optical device for detecting geometric values of the cutting element 3, which is mounted preferably at the second upright unit 22.

According to what has just been described, the machine 1 is capable of detecting or measuring in real time, during a cutting work step of a workpiece, various different parameters relating to the machine and to the cutting process, so as to report any deviations from ideal conditions of operation.

To this end the measurement assembly for measuring the tensioning load 8, the measurement assembly for measuring the elongation 6 of the cutting element 3, the temperature sensor 7, and, if any, the blade inspection assembly 9, are all functionally associated with a control unit (not shown) which receives the parameters measured/detected by the various different assemblies and executes the control method, which will be described below.

Before describing the method in detail, it should be noted that the machine 1 optionally comprises a cooling system 10 for cooling the cutting element 3, preferably in the form of a blowing device (that blows air or a cooling fluid) which is designed to dispense a stream of fluid in the direction of the blade 3, preferably at an end portion of the cutting section 35 of the blade 3.

The machine 1 also optionally comprises a sharpening station in which at least grinding wheels are active which are adapted to sharpen the blade 3; in this case too the sharpening stations are conventional per se and will not be described further here.

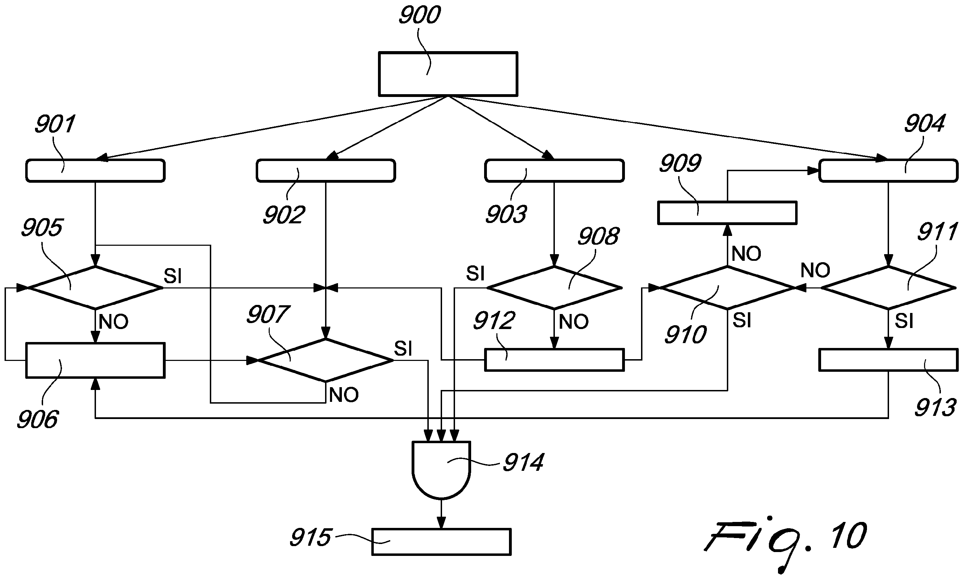

Turning now to the method for controlling the machine 1 in its most advanced configuration which has just been described, this entails substantially the steps described with reference to the flowchart in Figure 10.

Firstly, it should be noted that the method of the invention entails being carried out during the execution of a cutting work step of the machine 1.

In its advanced form, in addition to the steps of the method described above, the control method comprises the following optional aspects:
- in step a. the following parameters are also measured: the elongation 902 of the cutting element 3 and the temperature 903 of the cutting element 3;
- in step b., each one of the measured parameters is compared with a respective allowable range 905, 907, 908;
- in step c., if one or more of the measured parameters does not fall within the respective allowable range, then a respective compensation operation 906, 912 is performed so as to make the one or more parameters fall within the respective allowable range;
- if one or more of the measured parameters does not fall within the respective allowable range, then, following the respective compensation operation 906, 912, the following additional steps are performed:
   c2. measuring the elongation of the cutting element 3 again, and comparing it with the respective allowable range 907, and
   c3. if the elongation of the cutting element 3 measured in step c2. does not fall within the respective allowable range, then measuring the tensioning load 901 applied to the cutting element 3 of the machine 1, comparing it with the respective allowable range 905 and, if the measured tensioning load is outside the respective allowable range, then modifying the applied tensioning load 906 in order to bring the measured tensioning load within the respective allowable range, and then returning to step c2.

Optionally furthermore, the method in step c. comprises one or more of the following respective compensation operations:
- if the measured elongation of the cutting element 3 is outside the allowable elongation range for the cutting element 3, modifying the applied tensioning load 906;
- if the measured temperature of the cutting element 3 is outside the range of allowable temperatures for the cutting element 3, cooling 912 the cutting element 3 until the measured temperature of the cutting element 3 falls within the range of allowable temperatures for the cutting element 3.

Preferably, in the control method, if the measured temperature of the cutting element 3 is outside the range of allowable temperatures for the cutting element 3, then after cooling 912 the cutting element 3 until the measured temperature of the cutting element 3 falls within the range of allowable temperatures for the cutting element 3, a step is also performed of measuring the sharpening angles of the cutting element 3 and of comparing the measured angles with a range of allowable sharpening angles 910;
and wherein, after the step of measuring the sharpening angles, if a measured sharpening angle of the cutting element 3 is outside the range of allowable sharpening angles, then a step of sharpening the cutting element 909 is activated and subsequently the width 904 of the cutting element 3 is measured and then this measurement is compared with a minimum allowable width value 911 for the cutting element 3 and then the following step is performed:
c4. if the width of the cutting element 3 is less than or equal to the minimum allowable width value, reducing the tensioning load 913 applied to the cutting element 3.

The range of allowable values for the width of the cutting element 3 is then updated to a new range of allowable values after the corrective action specified in step c4 until a value adapted to the new geometric characteristics of the blade is found.

Optionally there is a step of monitoring the activity of the cutting element which comprises, if the cutting element is not active (i.e. not engaged in a cutting movement) measuring the time of inactivity, so that, once a predetermined threshold time of inactivity has passed, the tensioning load applied to the cutting element is released, preferably down to a value that is just sufficient to ensure that the cutting element does not disengage from the pulleys.

Generally, if the parameters outside the ranges of acceptable values endure over time, optionally an alert is generated for a user and/or the machine is automatically shut down.

The method just described improves the quality and the efficiency of the cutting, ensuring excellent cutting quality regardless of the type of material of the workpiece, while preventing defects including serious defects such as depression (flopping) in the central part of the operational area and premature breakage owing to critical process conditions being reached, with predictable partial or total discards of blocks of material, and further prolonging the useful life of the blade, in that it makes it possible to entirely automatically keep the cutting element at the most suitable tensioning value, while at the same time enabling the continuous monitoring of its state of deformation, of its temperature and of the geometric characteristics of the blade.

Since the tensioning load applied to the cutting element can undergo significant variations during the cutting (owing to the stresses that the blade undergoes - deformations, mechanical stresses and thermal stresses - and owing to wear) the method makes it possible to inspect the blade during cutting, in terms of operating parameters and of dimensions (width and thickness) and of the profile of the cutting edge, with the execution of corrective actions if such operating parameters or such dimensions or profile do not show optimal values, thus avoiding premature breakages and/or imperfect cuts.

In practice it has been found that the invention fully achieves the intended aim and objects by providing a cutting machine and a method for controlling said machine that are capable of preventing breakages or deformations of the blade or of the components of the machine.

Another advantage of the cutting machine and of the method for controlling said machine, according to the invention, is that they prevent errors in cutting or in contouring of the workpiece.

Another advantage of the cutting machine and of the method for controlling said machine, according to the invention, consists in that they are capable of facilitating the operations to release the blade tensioning in the non-operating condition.

Another advantage of the cutting machine and of the method for controlling said machine, according to the invention, consists in that they are capable of detecting any variation of the parameters that arises during operation (lengthening of the blade, torsional deformations necessary to shaping, thermal deformations, wear) and of making corrective actions in order to compensate such variations.

Another advantage of the cutting machine and of the method for controlling said machine, according to the invention, consists in that they are highly reliable, easy to implement and of low cost.

The invention thus conceived is susceptible of numerous modifications and variations, all of which are within the scope of the appended claims.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A cutting machine (1, 101) for cutting expanded resins, fibers or fabrics, which comprises:
- a cutting portal (2, 102) which comprises at least one first upright unit (21, 22) and a plurality of pulleys,
- a cutting element (3, 103) which is functionally engaged by the pulleys of the cutting portal (2, 102);
- a feed unit (4, 104) for feeding a workpiece, which cooperates with the cutting portal in order to bring the workpiece to the cutting element (3, 103) in order to cut the workpiece;
- a tensioning system (8, 108) for tensioning the cutting element (3, 103), which is configured to apply at least a tensioning load to the cutting element (3, 103),
wherein the tensioning system (8, 108) comprises:
- measurement means (84, 184) for measuring the tensioning load applied to the cutting element (3, 103), which are configured to measure a value of said tensioning load during a cutting work step of the machine (1, 101) and
- means for applying and adjusting the tensioning load (82, 182) which are functionally connected to said measurement means (84, 184) in order to modify the tensioning load applied to the cutting element (3, 103) in a cutting work step of the machine (1, 101), **characterized in that** the tensioning system for tensioning the cutting element (8, 108) comprises elastic means (81, 181) and wherein the adjustment means comprise an actuator (82, 182) which is coupled to the elastic means (81, 181) in order to apply a load to the elastic element (81, 181), wherein the measurement means (84, 184) for measuring the tensioning load are configured to measure a load of the elastic element (81, 181).

2. The cutting machine (1, 101) according to claim 1, wherein:
- the cutting portal (2, 102) comprises a second upright unit (21, 22),
- the cutting element (3, 103) extends along at least one first direction at least between the upright units (21, 22; 121, 122) of the cutting portal (2, 102);
- the feed unit (4, 104) comprises at least one conveyor table (41, 141) and a hold-down frame (42, 142), in which the hold-down frame (42, 142) is movable away from/toward the conveyor table (41, 141) in order to hold the workpiece between the two, at least the conveyor table (41, 141) and the hold-down frame (42, 142) being movable in a horizontal direction away from and toward the cutting element (3, 103) in order to bring the workpiece to the latter in order to cut the workpiece.

3. The cutting machine (1, 101) according to claim 2, wherein the upright units (21, 22; 121, 122) comprise pulleys (31, 32, 33, 34; 131, 132, 133, 134) for engagement of the cutting element (3, 103), at least one pulley being mounted so as to be movable (32, 132) on the respective upright unit (21, 121) and being coupled to said elastic element (81, 181) in order to transmit a force, applied by the actuator (82, 182) to the elastic element (81, 181), to the cutting element (3, 103) as a tensioning stress acting on the latter.

4. The cutting machine (1) according to one or more of the preceding claims, **characterized in that** it further comprises an assembly (6) for measuring the elongation of the cutting element (3), which is configured to measure an elongation of said cutting element (3) in a cutting work condition of the machine (1).

5. The cutting machine (1) according to one or more of the preceding claims, **characterized in that** it further comprises a temperature sensor assembly (7), which is configured to measure a temperature of said cutting element (3) in a cutting work condition of the machine (1).

6. The cutting machine (1) according to one or more of the preceding claims, **characterized in that** it further comprises a blade inspection assembly (9), which is configured to detect at least one geometric condition for sharpening and a width of the cutting element (3).

7. The cutting machine (1) according to one or more of the preceding claims, wherein the assembly (6) for measuring the elongation of the cutting element (3) comprises a position transducer (61) for measuring a displacement of the position of the movable pulley (32).

8. The cutting machine (1) according to claim 5, wherein the temperature sensor assembly (7) comprises an optical sensor (71) for the optical detection of the temperature of the cutting element (3), which is preferably provided at the first upright unit (21).

9. The cutting machine (1) according to claim 6, wherein the blade inspection assembly (9) comprises an optical device for detecting geometric values of the cutting element (3), the optical device being preferably provided at the second upright unit (22).

10. A method for controlling a cutting machine (1, 101) of any one of preceding claims for cutting expanded resins, fibers or fabrics, the method comprising the following steps, which are performed during the execution of a cutting work step of the machine:
a. measuring (901) at least one tensioning load applied to a cutting element (3, 103) of the machine (1, 101);
b. comparing said tensioning load to a respective allowable range of load values (905), and
c. if the measured tensioning load does not fall within said allowable range, modifying (906) the tensioning load so as to make it fall within the allowable range.

11. The control method according to claim 10, wherein in step a. the following parameters are also measured: the elongation (902) of the cutting element (3) of the machine (1) and the temperature (903) of the cutting element (3) of the machine (1);
wherein, in step b., each one of said measured parameters is compared with a respective allowable range (905, 907, 908);
and wherein, in step c., if one or more of said measured parameters does not fall within the respective allowable range, then a respective compensation operation (906, 912) is performed so as to make said one or more parameters fall within the respective allowable range;
if one or more of said measured parameters does not fall within the respective allowable range, then, following said respective compensation operation (906, 912), the following additional steps being performed:
c2. measuring the elongation of the cutting element (3) again, and comparing it with the respective allowable range (907), and
c3. if the elongation of the cutting element (3) measured in step c2. does not fall within the respective allowable range, then measuring the tensioning load (901) applied to the cutting element (3) of the machine (1), comparing it with the respective allowable range (905) and, if the measured tensioning load is outside the respective allowable range, then modifying the applied tensioning load (906) in order to bring the measured tensioning load within the respective allowable range, and then returning to step c2.

12. The control method according to claim 11, wherein step c. comprises one or more of the following respective compensation operations:
- if the measured elongation of the cutting element (3) is outside the allowable elongation range for the cutting element (3), modifying the applied tensioning load (906);
- if the measured temperature of the cutting element (3) is outside the range of allowable temperatures for the cutting element (3), intervening preferably by cooling (912) the cutting element (3) until the measured temperature of the cutting element (3) falls within the range of allowable temperatures for the cutting element (3), or temporarily suspending operation in order to allow the cutting element to cool.

13. The control method according to claim 12, wherein if the measured temperature of the cutting element (3) is outside the range of allowable temperatures for the cutting element (3), then after cooling (912) the cutting element (3) until the measured temperature of the cutting element (3) falls within the range of allowable temperatures for the cutting element (3), a step is also performed of measuring at least one sharpening angle of the cutting element (3) and of comparing said measured angle with a range of allowable sharpening angles (910);
and wherein, after said step of measuring a sharpening angle, if the measured sharpening angle of the cutting element (3) is outside the range of allowable sharpening angles, then a step of sharpening the cutting element (909) is activated and subsequently the width (904) of the cutting element (3) is measured and then this measurement is compared with a minimum allowable width value (911) for the cutting element (3) and then the following step is performed:
c4. if the width of the cutting element (3) is less than or equal to the minimum allowable width value, reducing the tensioning load (913) applied to the cutting element (3).

## Patentansprüche

1. Eine Schneidemaschine (1, 101) zum Schneiden geschäumter Harze, Fasern oder Textilien, die Folgendes umfasst:
- ein Schneideportal (2, 102), das mindestens eine erste aufrechte Einheit (21, 22) und eine Vielzahl von Riemenscheiben umfasst,
- ein Schneidelement (3, 103), das in funktionellem Eingriff mit den Riemenscheiben des Schneideportals (2, 102) steht,
- eine Zuführeinheit (4, 104) zum Zuführen eines Werkstücks, die mit dem Schneideportal zusammenwirkt, um das Werkstück zum Schneidelement (3, 103) zu transportieren, um das Werkstück zu schneiden;
- ein Spannsystem (8, 108) zum Spannen des Schneidelements (3, 103), das ausgebildet ist, um mindestens eine Zugbelastung auf das Schneidelement (3, 103) auszuüben,
wobei das Spannsystem (8, 108) Folgendes umfasst:
- Messmittel (84, 184) zum Messen der Zugbelastung, die auf das Schneidelement (3, 103) ausgeübt wird, welche konfiguriert sind, um einen Wert der Zugbelastung während eines Schneidearbeitsschritts der Maschine (1, 101) zu messen, und
- Mittel zum Ausüben und Anpassen der Zugbelastung (82, 182), die funktionell mit den Messmitteln (84, 184) verbunden sind, um die Zugbelastung, die auf das Schneidelement (3, 103) ausgeübt wird, in einem Schneidearbeitsschritt der Maschine (1, 101) zu modifizieren; **dadurch gekennzeichnet, dass** das Spannsystem zum Spannen des Schneidelements (8, 108) elastische Mittel (81, 181) umfasst; und wobei die Anpassungsmittel ein Antriebselement (82, 182) umfassen, welches mit den elastischen Mitteln (81, 181) gekoppelt ist, um eine Last auf das elastische Element (81, 181) auszuüben; wobei die Messmittel (84, 184) zum Messen der Zugbelastung konfiguriert sind, um eine Last des elastischen Elements (81, 181) zu messen.

2. Die Schneidemaschine (1, 101) gemäß Anspruch 1, worin
- das Schneideportal (2, 102) eine zweite aufrechte Einheit (21, 22) umfasst,
- das Schneidelement (3, 103) sich entlang mindestens einer ersten Richtung mindestens zwischen den aufrechten Einheiten (21, 22; 121, 122) des Schneideportals (2, 102) erstreckt;
- die Zuführeinheit (4, 104) mindestens einen Wandertisch (41, 141) und einen Niederhalterahmen (42, 142) umfasst, wobei der Niederhalterahmen (42, 142) vom Wandertisch (41, 141) fort und zu ihm hin bewegt werden kann, um das Werkstück zwischen den beiden zu halten; wobei mindestens der Wandertisch (41, 141) und der Niederhalterahmen (42, 142) in eine horizontale Richtung vom Schneidelement (3, 103) fort und zu ihm hin beweglich sind, um das Werkstück zu Letzterem zu bringen, um das Werkstück zu schneiden.

3. Die Schneidemaschine (1, 101) gemäß Anspruch 2, wobei die aufrechten Einheiten (21, 22; 121, 122) Riemenscheiben (31, 32, 33, 34; 131, 132, 133, 134) für den Eingriff des Schneidelements (3, 103) umfassen; wobei mindestens eine Riemenscheibe beweglich (32, 132) an der jeweiligen aufrechten Einheit (21, 121) montiert und mit dem elastischen Element (81, 181) gekoppelt ist, um eine Kraft, die vom Antriebselement (82, 182) auf das elastische Element (81, 181) ausgeübt wird, auf das Schneidelement (3, 103) als Zugspannung zu übertragen, die auf Letzteres einwirkt.

4. Die Schneidemaschine (1) gemäß einem oder mehreren der obigen Ansprüche, **dadurch gekennzeichnet, dass** sie weiter einen Aufbau (6) zur Messung der Elongation des Schneidelements (3) umfasst, der ausgebildet ist, um in einem Schneidearbeitszustand der Maschine (1) eine Elongation des Schneidelements (3) zu messen.

5. Die Schneidemaschine (1) gemäß einem oder mehreren der obigen Ansprüche, **dadurch gekennzeichnet, dass** sie weiter einen Temperatursensoraufbau (7) umfasst, der konfiguriert ist, um eine Temperatur des Schneidelements (3) in einem Schneidearbeitszustand der Maschine (1) zu messen.

6. Die Schneidemaschine (1) gemäß einem oder mehreren der obigen Ansprüche, **dadurch gekennzeichnet, dass** sie weiter einen Klingenüberprüfungsaufbau (9) umfasst, der ausgebildet ist, um mindestens einen geometrischen Zustand zum Schärfen und eine Breite des Schneidelements (3) zu erfassen.

7. Die Schneidemaschine (1) gemäß einem oder mehreren der obigen Ansprüche, wobei der Aufbau (6) zum Messen der Elongation des Schneidelements (3) einen Positionssensor (61) zur Messung einer Positionsänderung der beweglichen Riemenscheibe (32) umfasst.

8. Die Schneidemaschine (1) gemäß Anspruch 5, wobei der Temperatursensoraufbau (7) einen optischen Sensor (71) für die optische Erfassung der Temperatur des Schneidelements (3) umfasst, der vorzugsweise an der ersten aufrechten Einheit (21) angebracht ist.

9. Die Schneidemaschine (1) gemäß Anspruch 6, wobei der Klingenüberprüfungsaufbau (9) eine optische Vorrichtung zur Erfassung geometrischer Werte des Schneidelements (3) umfasst, wobei die optische Vorrichtung vorzugsweise an der zweiten aufrechten Einheit (22) angebracht ist.

10. Ein Verfahren zur Steuerung einer Schneidemaschine (1, 101) gemäß einem beliebigen der obigen Ansprüche zum Schneiden geschäumter Harze, Fasern oder Textilien, wobei das Verfahren folgende Schritte umfasst, die während der Durchführung eines Schneidearbeitsschritts der Maschine durchgeführt werden:
a. das Messen (901) mindestens einer Zugbelastung, die auf ein Schneidelement (3, 103) der Maschine (1, 101) ausgeübt wird;
b. das Vergleichen der Zugbelastung mit einem entsprechenden zulässigen Bereich von Belastungswerten (905) und
c. wenn die gemessene Zugbelastung nicht innerhalb des zulässigen Bereichs liegt, das Modifizieren (906) der Zugbelastung, um sie in den zulässigen Bereich zu überführen.

11. Das Steuerungsverfahren gemäß Anspruch 10, wobei in Schritt a. auch folgende Parameter gemessen werden: die Elongation (902) des Schneidelements (3) der Maschine (1) und die Temperatur (903) des Schneidelements (3) der Maschine (1);
wobei in Schritt b. jeder der gemessenen Parameter mit einem entsprechenden zulässigen Bereich (905, 907, 908) verglichen wird
und wobei in Schritt c., wenn einer oder mehrere der gemessenen Parameter nicht in den entsprechenden zulässigen Bereich fallen, ein entsprechender Kompensationsvorgang (906, 912) durchgeführt wird, um den einen oder die mehreren Parameter in den entsprechenden zulässigen Bereich zu überführen;
wobei, wenn einer oder mehrere der gemessenen Parameter nicht im entsprechenden zulässigen Bereich liegen, nach dem entsprechenden Kompensationsvorgang (906, 912) folgende zusätzlichen Schritte durchgeführt werden:
c2. das erneute Messen der Elongation des Schneidelements (3) und das Vergleichen derselben mit dem entsprechenden zulässigen Bereich (907) und,
c3. wenn die in Schritt c2. gemessene Elongation des Schneidelements (3) nicht im entsprechenden zulässigen Bereich liegt, das Messen der Zugbelastung (901), die auf das Schneidelement (3) der Maschine (1) ausgeübt wird, das Vergleichen derselben mit dem entsprechenden zulässigen Bereich (905) und, falls die gemessene Zugbelastung außerhalb des entsprechenden zulässigen Bereichs liegt, das Modifizieren der ausgeübten Zugbelastung (906), um die gemessene Zugbelastung in den entsprechenden zulässigen Bereich zu überführen; und das anschließende Zurückkehren zu Schritt c2.

12. Das Steuerungsverfahren gemäß Anspruch 11, worin Schritt c. einen oder mehrere der folgenden entsprechenden Kompensationsvorgänge umfasst:
- wenn die gemessene Elongation des Schneidelements (3) außerhalb des zulässigen Elongationsbereichs für das Schneidelement (3) liegt, das Modifizieren der ausgeübten Zugbelastung (906);
- wenn die gemessene Temperatur des Schneidelements (3) außerhalb des Bereichs zulässiger Temperaturen für das Schneidelement (3) liegt, das Eingreifen, vorzugsweise durch Kühlen (912) des Schneidelements (3), bis die gemessene Temperatur des Schneidelements (3) innerhalb des Bereichs zulässiger Temperaturen für das Schneidelement (3) liegt, oder das vorübergehende Einstellen des Vorgangs, um das Schneidelement abkühlen zu lassen.

13. Das Steuerungsverfahren gemäß Anspruch 12, worin, wenn die gemessene Temperatur des Schneidelements (3) außerhalb des Bereichs zulässiger Temperaturen für das Schneidelement (3) liegt, nach dem Kühlen (912) des Schneidelements (3), bis die gemessene Temperatur des Schneidelements (3) im Bereich zulässiger Temperaturen für das Schneidelement (3) liegt, auch ein Schritt des Messens mindestens eines Schleifwinkels des Schneidelements (3) und des Vergleichens des gemessenen Winkels mit einem Bereich zulässiger Schleifwinkel (910) durchgeführt wird;
und worin nach dem Schritt des Messens eines Schleifwinkels, wenn der gemessene Schleifwinkel des Schneidelements (3) außerhalb des Bereichs zulässiger Schleifwinkel liegt, ein Schritt des Schärfens des Schneidelements (909) ausgelöst wird und anschließend die Breite (904) des Schneidelements (3) gemessen wird, und dann diese Messung mit einem zulässigen Mindest-Breitenwert (911) für das Schneidelement (3) verglichen wird und dann folgender Schritt durchgeführt wird:
c4. wenn die Breite des Schneidelements (3) kleiner als oder gleich dem zulässigen Mindest-Breitenwert ist, das Reduzieren der Zugbelastung (913), die auf das Schneidelement (3) ausgeübt wird.

## Revendications

1. Machine de coupe (1, 101) pour couper des résines expansées, des fibres ou des tissus, comprenant :
un portail de coupe (2, 102) qui comprend au moins une première unité verticale (21, 22) et une pluralité de poulies,
un élément de coupe (3, 103) qui est fonctionnellement mis en prise par les poulies du portail de coupe (2, 102) ;
une unité d'alimentation (4, 104) pour alimenter une pièce à usiner, qui coopère avec le portail de coupe pour amener la pièce à usiner à l'élément de coupe (3, 103) afin de couper la pièce à usiner ;
un système de tension (8, 108) pour tendre l'élément de coupe (3, 103), qui est configuré pour appliquer au moins une charge de tension sur l'élément de coupe (3, 103),
dans laquelle le système de tension (8, 108) comprend :
des moyens de mesure (84, 184) pour mesurer la charge de tension appliquée sur l'élément de coupe (3, 103), qui sont configurés pour mesurer une valeur de ladite charge de tension pendant une étape opérationnelle de coupe de la machine (1, 101), et
des moyens pour appliquer et régler la charge de tension (82, 182) qui sont fonctionnellement raccordés auxdits moyens de mesure (84, 184) afin de modifier la charge de tension appliquée sur l'élément de coupe (3, 103) lors d'une étape opérationnelle de coupe de la machine (1, 101), **caractérisée en ce que** le système de tension pour tendre l'élément de coupe (8, 108) comprend des moyens élastiques (81, 181) et dans laquelle les moyens de réglage comprennent un actionneur (82, 182) qui est couplé aux moyens élastiques (81, 181) afin d'appliquer une charge sur l'élément élastique (81, 181), dans laquelle les moyens de mesure (84, 184) pour mesurer la charge de tension sont configurés pour mesurer une charge de l'élément élastique (81, 181).

2. Machine de coupe (1, 101) selon la revendication 1, dans laquelle :
le portail de coupe (2, 102) comprend une seconde unité verticale (21, 22),
l'élément de coupe (3, 103) s'étend le long d'au moins une première direction au moins entre les unités verticales (21, 22 ; 121, 122) du portail de coupe (2, 102) ;
l'unité d'alimentation (4, 104) comprend au moins une table de transport (41, 141) et un bâti de blocage (42, 142), dans laquelle le bâti de blocage (42, 142) peut se rapprocher/s'éloigner de la table de transport (41, 141) afin de maintenir la pièce à usiner entre les deux, au moins la table de transport (41, 141) et le bâti de blocage (42, 142) étant mobiles dans une direction horizontale à l'opposé de et vers l'élément de coupe (3, 103) pour amener la pièce à usiner vers ce dernier afin de couper la pièce à usiner.

3. Machine de coupe (1, 101) selon la revendication 2, dans laquelle les unités verticales (21, 22 ; 121, 122) comprennent des poulies (31, 32, 33, 34 ; 131, 132, 133, 134) pour la mise en prise de l'élément de coupe (3, 103), au moins une poulie étant montée pour être mobile (32, 132) sur l'unité verticale (21, 121) respective et étant couplée audit élément élastique (81, 181) afin de transmettre une force, appliquée par l'actionneur (82, 182) à l'élément élastique (81, 181), à l'élément de coupe (3, 103) en tant que sollicitation de traction agissant sur ce dernier.

4. Machine de coupe (1) selon une ou plusieurs des revendications précédentes, **caractérisée en ce qu'**elle comprend en outre un ensemble (6) pour mesurer l'allongement de l'élément de coupe (3), qui est configuré pour mesurer un allongement dudit élément de coupe (3) dans une condition opérationnelle de coupe de la machine (1).

5. Machine de coupe (1) selon une ou plusieurs des revendications précédentes, **caractérisée en ce qu'**elle comprend en outre un ensemble de capteur de température (7) qui est configuré pour mesurer une température dudit élément de coupe (3) dans une condition opérationnelle de coupe de la machine (1).

6. Machine de coupe (1) selon une ou plusieurs des revendications précédentes, **caractérisée en ce qu'**elle comprend en outre un ensemble d'inspection de lame (9) qui est configuré pour détecter au moins une condition géométrique pour l'affûtage et une largeur de l'élément de coupe (3).

7. Machine de coupe (1) selon une ou plusieurs des revendications précédentes, dans laquelle l'ensemble (6) pour mesurer l'allongement de l'élément de coupe (3) comprend un transducteur de position (61) pour mesurer un déplacement de la position de la poulie mobile (32).

8. Machine de coupe (1) selon la revendication 5, dans laquelle l'ensemble de capteur de température (7) comprend un capteur optique (71) pour la détection optique de la température de l'élément de coupe (3) qui est de préférence prévu au niveau de la première unité verticale (21).

9. Machine de coupe (1) selon la revendication 6, dans laquelle l'ensemble d'inspection de lame (9) comprend un dispositif optique pour détecter des valeurs géométriques de l'élément de coupe (3), le dispositif optique étant de préférence prévu au niveau de la seconde unité verticale (22).

10. Procédé de contrôle d'une machine de coupe (1, 101) selon l'une quelconque des revendications précédentes, pour couper des résines expansées, des fibres ou des tissus, le procédé comprenant les étapes suivantes, qui sont réalisées pendant l'exécution d'une étape opérationnelle de coupe de la machine, consistant à :
a. mesurer (901) au moins une charge de tension appliquée sur un élément de coupe (3, 103) de la machine (1, 101) ;
b. comparer ladite charge de tension à une plage admissible respective de valeurs de charge (905), et
c. si la charge de tension mesurée ne se trouve pas dans la plage admissible, modifier (906) la charge de tension afin qu'elle se trouve dans la plage admissible.

11. Procédé de contrôle selon la revendication 10, dans lequel, à l'étape a., on mesure également les paramètres suivants : l'allongement (902) de l'élément de coupe (3) de la machine (1) et la température (903) de l'élément de coupe (3) de la machine (1) ;
dans lequel, à l'étape b., chacun desdits paramètres mesurés est comparé à une plage admissible (905, 907, 908) respective ;
et dans lequel, à l'étape c., si un ou plusieurs desdits paramètres mesurés ne se trouvent pas dans la plage admissible respective, alors une opération de compensation (906, 912) respective est réalisée afin que lesdits un ou plusieurs paramètres se trouvent dans la plage admissible respective ;
si un ou plusieurs desdits paramètres mesurés ne se trouvent pas dans la plage admissible respective, alors suivre ladite opération de compensation (906, 912) respective, lesdites étapes supplémentaires suivantes étant réalisées :
c2. mesurer l'allongement de l'élément de coupe (3) à nouveau, et le comparer à la plage admissible (907) respective, et
c3. si l'allongement de l'élément de coupe (3) mesuré à l'étape c2. ne se trouve pas dans la plage admissible respective, alors mesurer la charge de tension (901) appliquée sur l'élément de coupe (3) de la machine (1), la comparer à la plage admissible (905) respective, et si la charge de tension mesurée est hors de la plage admissible respective, alors modifier la charge de tension (906) appliquée afin d'amener la charge de tension mesurée dans la plage admissible respective, et ensuite revenir à l'étape c2.

12. Procédé de contrôle selon la revendication 11, dans lequel l'étape c. comprend une ou plusieurs des opérations de compensation respectives suivantes :
si l'allongement mesuré de l'élément de coupe (3) est hors de la plage d'allongement admissible pour l'élément de coupe (3), modifier la charge de tension (906) appliquée ;
si la température mesurée de l'élément de coupe (3) est hors de la plage de températures admissibles pour l'élément de coupe (3), intervenir, de préférence, en refroidissant (912) l'élément de coupe (3) jusqu'à ce que la température mesurée de l'élément de coupe (3) se trouve dans la plage de températures admissibles pour l'élément de coupe (3) ou suspendre temporairement l'opération afin de permettre à l'élément de coupe de refroidir.

13. Procédé de contrôle selon la revendication 12, dans lequel si la température mesurée de l'élément de coupe (3) est hors de la plage de températures admissibles pour l'élément de coupe (3), alors après l'étape de refroidissement (912) de l'élément de coupe (3) jusqu'à ce que la température mesurée de l'élément de coupe (3) se trouve dans la plage de températures admissibles pour l'élément de coupe (3), une étape est également réalisée pour mesurer au moins un angle d'affûtage de l'élément de coupe (3) et pour comparer ledit angle mesuré avec une plage d'angles d'affûtage (910) admissibles ;
et dans lequel, après ladite étape consistant à mesurer un angle d'affûtage, si l'angle d'affûtage mesuré de l'élément de coupe (3) est hors de la plage d'angles d'affûtage admissibles, alors une étape consistant à affûter l'élément de coupe (909) est activée et ensuite la largeur (904) de l'élément de coupe (3) est mesurée et ensuite cette mesure est comparée à une valeur de largeur (911) admissible pour l'élément de coupe (3) et ensuite l'étape suivante est réalisée :
c4. si la largeur de l'élément de coupe (3) est inférieure ou égale à la valeur de largeur admissible minimum, réduire la charge de tension (913) appliquée sur l'élément de coupe (3).
